# EUROPEAN PATENT SPECIFICATION

(11) **EP 4 491 264 B1**
(45) Date of publication and mention of the grant of the patent: **04.02.2026**
(21) Application number: 24167663.4
(22) Date of filing: 28.03.2024
(51) Int. Cl.: B01F 23/53, B01F 27/192, B01F 27/271, B01F 27/808, B01F 27/81, D21B 1/34, A47J 43/046, A47J 43/07

(54) **PULPING DEVICE**
AUFSCHLUSSVORRICHTUNG
DISPOSITIF DE RÉDUCTION EN PÂTE

(30) Priority: 12.04.2023 CN 202320880077 U
(43) Date of publication of application: 15.01.2025
(73) Proprietor: Shangshui Smartech Ltd., Shenzhen, Guangdong 518118 (CN)
(72) Inventor: DU, Baodong, Shenzhen, 518118 (CN); KE, Jian, Shenzhen, 518118 (CN); JIN, Xudong, Shenzhen, 518118 (CN); SHI, Qiao, Shenzhen, 518118 (CN)
(74) Representative: Mathys & Squire

(56) References cited:
- WO-A1-2019/011963
- CN-A- 113 499 698
- CN-U- 218 834 318
- DE-C- 673 014
- GB-A- 646 591
- GB-A- 780 661
- US-A1- 2022 062 852

## Description

### TECHNICAL FIELD

This disclosure relates to the field of pulping technologies, and in particular, to a pulping device.

### BACKGROUND

In the fields such as industry and food, a pulping device is generally used to mix powder and liquid to obtain pulp. The existing pulping device has a large clearance between a mixing impeller assembly and a bottom wall of a housing, and some liquid flows through the clearance and is discharged through a liquid outlet without mixing with the powder, thereby affecting the mixing quality of the pulp.

DE673014C disclose a processor for producing physical foam for fire-fighting purposes. DE673014C relates to a processor for producing physical foam from a coarse mixture of air or gas, water, and a foaming agent, generated, for example, by a pump. In a known foam processor of this type, several rotating discs and several stationary, partially perforated annular discs are arranged in a housing, with brushes mounted on either side of the rotating discs. The discs and annular discs are spaced such that the mixture is conveyed through the device in a wave-like manner.

CN113499698A discloses a powder-liquid mixing machine which comprises a main shell, a liquid dispersing device, a powder conveying device and a mixing device; a liquid dispersing area and a powder-liquid mixing area are formed in the main shell; the liquid dispersing device is used for dispersing to-be-mixed liquid in the liquid dispersing area and enabling the dispersed to-be-mixed liquid to enter the powder-liquid mixing area; the powder conveying device is used for conveying to-be-mixed powder into the powder-liquid mixing area; and the mixing device is used for mixing the to-be-mixed powder entering the powder-liquid mixing area and the to-be-mixed liquid entering the powder-liquid mixing area and discharging the mixed powder and the mixed liquid. During use, to-be-mixed slurry is dispersed in the liquid dispersing area through the liquid dispersing device and then enters the powder-liquid mixing area, and to-be-mixed powder conveyed by the powder conveying device is mixed through the material mixing device.

GB780661 discloses a device comprising a housing, a drive shaft and an impeller assembly, wherein the impeller assembly comprises a surface with annular protrusions/grooves and the housing comprises a surface with matching annular protrusions/grooves, wherein the impeller assembly comprises a first flow channel.

### SUMMARY

Aspects of the invention are set out in the appended claims. The disclosure provides a pulping device, the pulping device includes a housing, a drive shaft, and an impeller assembly. The housing defines a cavity. The impeller assembly is disposed in the cavity and configured to be driven to rotate by the drive shaft. A bottom surface of the impeller assembly is disposed opposite to an end surface of the housing. One of the bottom surface of the impeller assembly or the end surface of the housing is provided with an annular protrusion, the other one of the bottom surface of the impeller assembly or the end surface of the housing defines an annular groove matching the annular protrusion, and an interference-proof clearance is defined between an outer wall of the annular protrusion and an inner wall of the annular groove.

### BRIEF DESCRIPTION OF THE DRAWINGS

The accompanying drawings, which are incorporated into the specification and constitute a part of the specification, illustrate embodiments consistent with the disclosure and together with the description, serve to explain principles of the disclosure.
FIG. 1 is a sectional diagram of a pulping device provided by an embodiment of the disclosure.
FIG. 2 is an enlarged diagram of a pulping device provided by an embodiment of FIG. 1 at A.
FIG. 3 is a schematic structural diagram of an annular protrusion and an annular groove provided by an embodiment of the disclosure.
FIG. 4 is a structural schematic diagram of a support plate and part of a housing provided by an embodiment of the disclosure.
FIG. 5 is a sectional diagram of a support plate and part of a housing provided by the embodiment illustrated in FIG. 4.
FIG. 6 is a sectional diagram of a pulping device provided by another embodiment of the disclosure.
FIG. 7 is a schematic structural diagram of a guide impeller provided by an embodiment of the disclosure.
FIG. 8 is a sectional diagram of a guide impeller provided by the embodiment of FIG. 7.

Reference signs: pulping device 100; housing 10; cavity 101; clearance 102; liquid inlet 103; liquid outlet 104; second flow channel 105; third flow channel 106; feed inlet 107; annular protrusion 11; support plate 12; drive shaft 20; impeller assembly 30; first flow channel 301; opening 3011; annular groove 31; mixing impeller 32; guide impeller 33; guide flow channel 331; and guide vane 332.

### DETAILED DESCRIPTION

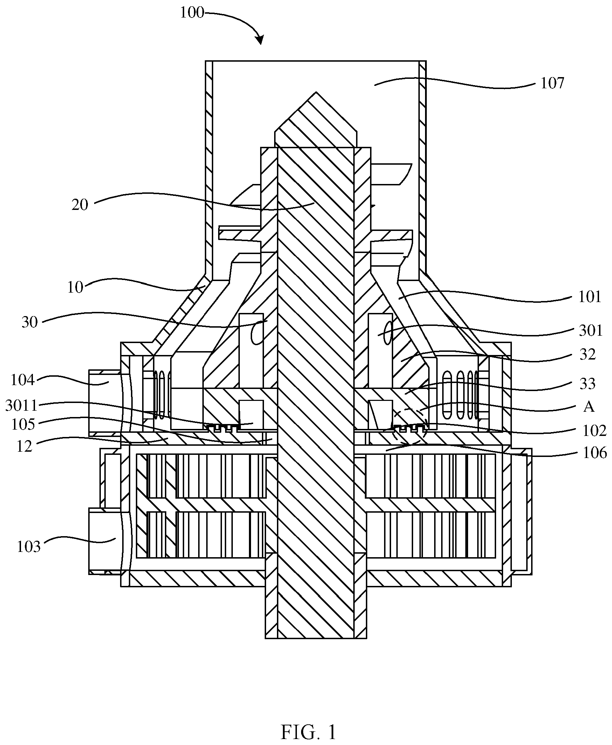

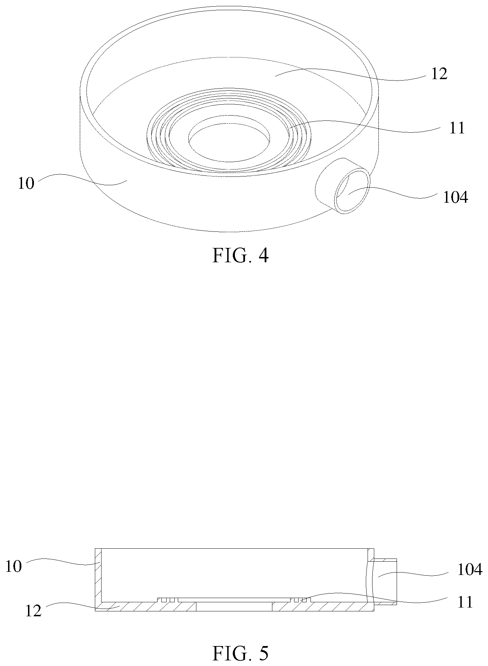

The pulping device of embodiments of the disclosure will be described in detail with reference to FIG. 1 to FIG. 8. Under the condition of no conflict, the following embodiments and features in the embodiments can complement each other or be combined with each other.

The disclosure provides a pulping device 100. The pulping device includes a housing 10, a drive shaft 20 and an impeller assembly 30. The housing 10 defines a cavity 101, the drive shaft 20 is disposed in the cavity 101, and the impeller assembly 30 is disposed in the cavity 101 and is configured to be driven to rotate by the drive shaft 20.

A bottom surface of the impeller assembly 30 is disposed opposite to an end surface of the housing 10, one of the bottom surface of the impeller assembly 30 or the end surface of the housing 10 is provided with an annular protrusion 11, the other one of the bottom surface of the impeller assembly 30 or the end surface of the housing 10 defines an annular groove 31 matching the annular protrusion 11, and an interference-proof clearance 102 is defined between an outer wall of the annular protrusion 11 and an inner wall of the annular groove 31.

The annular protrusion 11 and the annular groove 31 matching the annular protrusion 11 are disposed on the bottom surface of the impeller assembly 30 and the end surface of the housing 10 to form a labyrinthine sealing structure, which can prevent liquid which does not participate in mixing from flowing out of a liquid outlet directly after passing through the clearance 102 due to an excessive clearance between the bottom surface of the impeller assembly 30 and the end surface of the housing 10. By means of the annular protrusion 11 and the matching annular groove 31, the flow path of the liquid can be changed, so that the liquid flows to the impeller assembly 30 as much as possible and participates in powder mixing, which is configured to improve the mixing efficiency and ensure mixing quality.

In an embodiment, as illustrated in FIG. 1, the housing 10 of the pulping device 100 defines a liquid inlet 103 in a bottom side wall of the housing 10, the housing 10 defines a liquid outlet 104 in a middle side wall of the housing 10, and the housing 10 defines a feed inlet 107 on the top. Liquid enters the cavity 101 through the liquid inlet 103, powder enters the cavity 101 through the feed inlet 107, the powder is dispersed by the impeller assembly 30 and then is mixed with the liquid, and pulp formed after mixing flows out through the liquid outlet 104.

In an embodiment, as illustrated in FIGS. 1, 4, and 5, the housing 10 is provided with a support plate 12, one of the bottom surface of the impeller assembly 30 or an upper surface of the support plate 12 is provided with an annular protrusion 11, and the other of the bottom surface of the impeller assembly 30 or the upper surface of the support plate 12 defines the annular groove 31 matching the annular protrusion 11. By disposing the support plate 12, the cavity 101 is divided into two parts, an upper part and a lower part, the impeller assembly 30 is disposed in a part of the cavity 101 above the support plate 12, and other components can be disposed in a part of the cavity 101 below the support plate 12 such as a dispersion cylinder for dispersing pulp. The liquid outlet 104 is defined above the support plate 12. The pulp can flow out directly through the liquid outlet 104 after being mixed by the impeller assembly 30, which is quick and convenient.

In an embodiment, as illustrated in FIG. 1, the drive shaft 20 passes through the support plate 12, a second flow channel 105 is defined between the drive shaft 20 and the support plate 12, and a third flow channel 106 is defined below the support plate 12. The liquid entering from the liquid inlet 103 can pass through the third flow channel 106 and the second flow channel 105 in sequence and then enter the cavity 101 above the support plate 12.

According to the invention, as illustrated in FIG. 1, the impeller assembly 30 defines a first flow channel 301, the first flow channel 301 extends through a bottom surface of the impeller assembly 30 and a side surface of the impeller assembly 30, and the first flow channel 301 communicates with the cavity 101. Since the annular protrusion 11 and the annular groove 31 are disposed on the bottom surface of the impeller assembly 30 and the end surface of the housing 10, the annular protrusion 11 and the annular groove 31 cooperatively prevent the liquid from flowing, and thus by defining the first flow channel 301, a passage for the liquid to flow can be provided, which facilitates the liquid to flow to the top and side of the impeller assembly 30 to participate in mixing with the powder.

In an embodiment, as illustrated in FIG. 1, the first flow channel 301 has an opening 3011 on the bottom surface of the impeller assembly 30, and a distance between the opening 3011 and the drive shaft 20 is less than a radius of the annular protrusion 11. As such, after the liquid enters the clearance 102 between the bottom surface of the impeller assembly 30 and the end surface (or the upper surface of the support plate 12) of the housing 10, the liquid enters the first flow channel 301 through the opening 3011 on the bottom surface of the impeller assembly 30, which can more effectively prevent the liquid from passing through the clearance 102 directly and flowing out of the liquid outlet 104 without participating in mixing.

In an embodiment, as illustrated in FIG. 1, the impeller assembly 30 includes a mixing impeller 32, one of a bottom surface of the mixing impeller 32 or the end surface of the housing 10 is provided with the annular protrusion 11, and the other one of the bottom surface of the mixing impeller 32 or the end surface of the housing 10 defines the annular groove 31 matching the annular protrusion 11. When the powder falls down from the feed inlet 107, the mixing impeller 32 is able to break up lumps in the falling powder, and after the powder is in contact with the liquid, the mixing impeller 32 stirs a liquid mixture of the powder and the liquid, thereby obtaining a pulp with better mixing effect.

When the support plate 12 is disposed in the housing 10, one of the bottom surface of the mixing impeller 32 or the upper surface of the support plate 12 is provided with the annular protrusion 11, and the other one of the bottom surface of the mixing impeller 32 or the upper surface of the support plate 12 defines the annular groove 31 matching the annular protrusion 11.

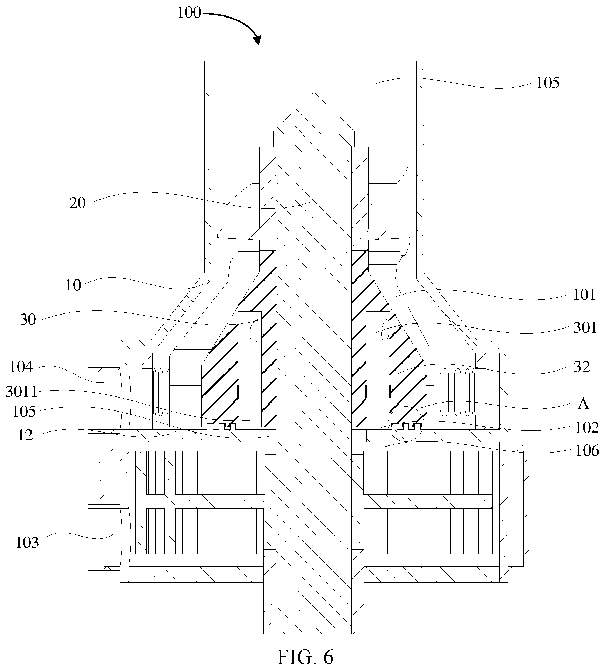

In an embodiment, as illustrated in FIG. 6, the impeller assembly 30 includes the mixing impeller 32 and a guide impeller 33, the guide impeller 33 is disposed below the mixing impeller 32, and one of a bottom surface of the guide impeller 33 or the end surface of the housing 10 is provided with the annular protrusion 11, and the other one of the bottom surface of the guide impeller 33 or end surface of the housing 10 defines the annular groove 31 matching the annular protrusion 11. The guide impeller 33 is able to guide the liquid to flow above the mixing impeller 32, thereby facilitating mixing of the liquid and the powder.

When the support plate 12 is disposed in the housing 10, one of the bottom surface of the guide impeller 33 or the upper surface of the support plate 12 is provided with the annular protrusion 11, and the other one of the bottom surface of the guide impeller 33 or the upper surface of the support plate defines the annular groove 31 matching the annular protrusion 11.

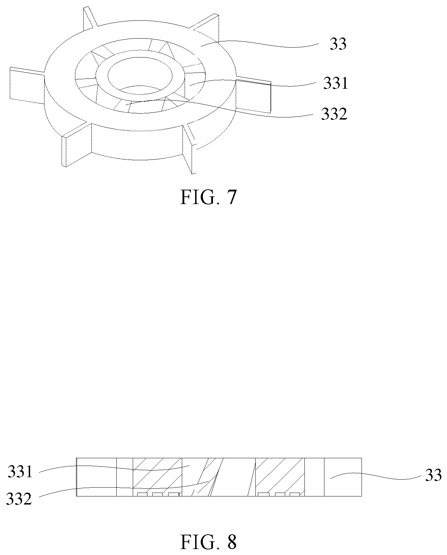

In an embodiment, as illustrated in FIGS. 7 and 8, the guide impeller 33 defines a guide flow channel 331 disposed around a central axis of the guide impeller 33, and a guide vane(s) 332 is disposed in the guide flow channel 331. The guide vane(s) 332 of the guide impeller 33 is disposed obliquely. When the guide impeller 33 rotates, the guide impeller 33 attracts the liquid below the guide impeller 33, and attracts the liquid into the guide flow channel 331 and to flow into the first flow channel 301.

In an embodiment, a dimension of a clearance between the outer wall of the annular protrusion 11 and the inner wall of the annular groove 31 is in a range of 0.05 mm-0.5 mm. In this way, the clearance is small, and the liquid can be prevented from flowing out through the clearance effectively.

In an embodiment, a cross section of the annular protrusion 11 is rectangular, triangular, semicircular, trapezoidal or irregular, and a cross section of the annular groove 31 is rectangular, triangular, semicircular, trapezoidal or irregular. For example, the cross section of the annular protrusion 11 is semicircular, the cross section of the annular groove 31 is semicircular, and the semicircular annular protrusion 11 and the semicircular annular groove 31 each have a simple structure and are easy to be manufactured.

In an embodiment, multiple annular protrusions 11 and multiple annular grooves 31 are provided. The multiple annular protrusions are coaxial and spaced apart from one another, and the multiple annular grooves 31 correspond to the multiple annular protrusions 11, and are coaxial and spaced apart from one another. In the illustrated embodiment, in a direction from the drive shaft 20 to a side wall of the housing 10, radii of the multiple annular protrusions 11 sequentially increases, and radii of the multiple annular groove 31 sequentially increases. The multiple annular protrusions 11 and the multiple annular grooves 31 cooperate with each other to improve the sealing performance of the clearance 102 and reduce the flow of liquid passing through the clearance 102.

In an embodiment, cross sections of the multiple annular protrusions 11 are in the shape of any one or any combination of rectangle, triangle, semicircle, trapezoid, or irregular shapes, and cross sections of the multiple the annular grooves 31 are in the shape of any one or any combination of rectangle, triangle, semicircle, trapezoid, or irregular shapes. Cross sections of the annular protrusion 11 and the annular groove 31 adjacent to the annular protrusion 11 may be the same in shape, for example, both rectangular. Cross sections of annular protrusion 11 and the annular groove 31 adjacent to the annular protrusion 11 may also be different in shape, for example, the cross section of the annular protrusion 11 is rectangular, and the cross section of the annular groove 31 adjacent to the annular protrusion 11 is semi-circular.

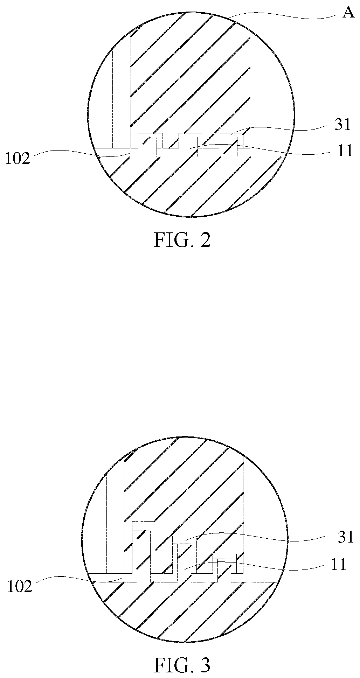

In an embodiment, as illustrated in FIG. 3, in the direction from the drive shaft 20 to a side wall of the housing 10, radii of the multiple annular protrusions 11 successively increase, heights of the multiple annular protrusions 11 successively decrease, and depths of the multiple annular grooves 31 successively decrease correspondingly. After the liquid enters the clearance 102, the liquid firstly enters between the annular protrusion 11 with the smallest radius and the annular groove 31 with the smallest radius. Setting the annular protrusion 11 with the smallest radius higher is more conducive to preventing the liquid from entering between the outer wall of the annular protrusion 11 and the inner wall of the annular groove 31, thereby preventing the liquid from flowing through the clearance 102.

In an embodiment, in the direction from the drive shaft 20 to a side wall of the housing 10, radii of the multiple annular projections 11 successively increase, heights of the multiple annular projections 11 successively increase, and depths of the multiple annular grooves 31 successively increase correspondingly. After the liquid enters the clearance 102, the liquid moves in a direction from the drive shaft 20 to the side wall of the housing 10, and annular protrusions 11 with successively increase height are more conducive to preventing the liquid from flowing through the clearance 102.

A specific working flow of the pulping device provided in the disclosure is as follows.

As illustrated in FIG. 6, liquid enters the cavity 101 of the housing 10 through the liquid inlet 103, the liquid flows through the third flow channel 106 and the second flow channel 105 in sequence, and then enters the guide flow channel 331 under the attraction force provided by the guide impeller 33. Some of the liquid enters the clearance 102, and due to the obstruction of the annular protrusion 11 and the annular groove 31, the liquid hardly flows out through the clearance 102. The liquid entering the guide flow channel 331 continues to flow upwards and enters the first flow channel 301, and then flows out of the impeller assembly 30 to the top and side of the impeller assembly. The powder enters the cavity 101 through the feed inlet 107 and then contacts with the liquid, the impeller assembly 30 mixes and stirs the liquid and the powder to obtain pulp, and the pulp finally flows out through the liquid outlet 104.

The above are merely preferred embodiments of the disclosure, and is not a limitation to the disclosure in any form. Although the disclosure has been disclosed with the preferred embodiments as above, the above embodiments are not intended to limit the disclosure, any person skilled in the art can make some changes or modifications to equivalent embodiments without departing from the scope of the technical solutions of the disclosure. The invention is defined by the appended claims.

## Claims

1. A pulping device, comprising:
a housing (10) defining a cavity (101);
a drive shaft (20);
an impeller assembly (30), disposed in the cavity (101), is configured to be driven to rotate by the drive shaft (20); wherein
a bottom surface of the impeller assembly (30) is disposed opposite to an end surface of the housing (10); and one of the bottom surface of the impeller assembly (30) or the end surface of the housing (10) is provided with an annular protrusion (11), the other one of the bottom surface of the impeller assembly (30) or the end surface of the housing (10) defines an annular groove (31) matching the annular protrusion (11), and an interference-proof clearance (102) is defined between an outer wall of the annular protrusion (11) and an inner wall of the annular groove (31);
wherein the impeller assembly (30) defines a first flow channel (301), the first flow channel (301) extends through the bottom surface of the impeller assembly (30) and a side surface of the impeller assembly (30), and the first flow channel (301) communicates with the cavity (101).

2. The pulping device of claim 1, wherein a dimension of the clearance between the outer wall of the annular protrusion (11) and the inner wall of the annular groove (31) is in a range of 0.05 mm-0.5 mm.

3. The pulping device of claim 1, wherein a cross section of the annular protrusion (11) is rectangular, triangular, semicircular, trapezoidal, or irregular, and a cross section of the annular groove (31) is rectangular, triangular, semicircular, trapezoidal, or irregular.

4. The pulping device of claim 1, wherein the annular protrusion (11) is implemented as a plurality of annular protrusions, the annular groove (31) is implemented as a plurality of annular groove (31), the plurality of annular protrusions are coaxial and spaced apart from one another, and the plurality of annular grooves (31) correspond to the plurality of annular protrusions (11) and are coaxial and spaced apart from one another.

5. The pulping device of claim 4, wherein cross sections of the plurality of annular protrusions (11) are in the shape of any one or any combination of rectangle, triangle, semicircle, trapezoid, or irregular shapes, and cross sections of the plurality of the annular grooves (31) are in the shape of any one or any combination of rectangle, triangle, semicircle, trapezoid, or irregular shapes.

6. The pulping device of claim 4, wherein in a direction from the drive shaft (20) to a side wall of the housing (10), radii of the plurality of annular protrusions (11) successively increase, heights of the plurality of annular protrusions (11) successively decrease, and depths of the plurality of annular grooves (31) successively decrease correspondingly.

7. The pulping device of claim 4, wherein in a direction from the drive shaft (20) to a side wall of the housing (10), the radii of the plurality of annular protrusions (11) successively increase, the heights of the plurality of annular protrusions (11) successively increase, and the depths of the plurality of annular grooves (31) successively increase correspondingly.

8. The pulping device of claim 1, wherein the impeller assembly (30) comprises a mixing impeller (32), one of a bottom surface of the mixing impeller (32) or the end surface of the housing (10) is provided with the annular protrusion (11), and the other one of the bottom surface of the mixing impeller (32) or the end surface of the housing (10) defines the annular groove (31) matching the annular protrusion (11).

9. The pulping device of claim 8, wherein the housing (10) is provided with a support plate (12), one of the bottom surface of the mixing impeller (32) or an upper surface of the support plate (12) is provided with the annular protrusion (11), and the other one of the bottom surface of the mixing impeller (32) or the upper surface of the support plate (12) defines the annular groove (31) matching the annular protrusion (11).

10. The pulping device of claim 1, wherein the impeller assembly (30) comprises a mixing impeller (32) and a guide impeller (33), the guide impeller (33) is disposed below the mixing impeller (32); one of a bottom surface of the guide impeller (33) or the end surface of the housing (10) defines the annular protrusion (11), and the other one of the bottom surface of the guide impeller (33) or the end surface of the housing (10) defines the annular groove (31) matching the annular protrusion (11).

11. The pulping device of claim 10, wherein the housing (10) is provided with a support plate (12), one of the bottom surface of the guide impeller (33) or an upper surface of the support plate (12) is provided with the annular protrusion (11), and the other one of the bottom surface of the guide impeller (33) or the upper surface of the support plate (12) defines the annular groove (31) matching the annular protrusion (11).

12. The pulping device of claim 10, wherein the guide impeller (33) defines a guide flow channel (331) around a central axis of the guide impeller (33), and a guide vane (332) is disposed in the guide flow channel (331).

13. The pulping device of claim 1, wherein the housing (10) is provided with a support plate (12), one of the bottom surface of the impeller assembly (30) or an upper surface of the support plate (12) is provided with the annular protrusion (11), and the other one of the bottom surface of the impeller assembly (30) or the upper surface of the support plate (12) defines the annular groove (31) matching the annular protrusion (11).

14. The pulping device of claim 1, wherein the first flow channel (301) has an opening (3011) on the bottom surface of the impeller assembly (30), and a distance between the opening (3011) and the drive shaft (20) is less than a radius of the annular protrusion (11).

## Patentansprüche

1. Aufschlussvorrichtung, die umfasst:
ein Gehäuse (10), das einen Hohlraum (101) definiert;
eine Antriebswelle (20);
eine in dem Hohlraum (101) angeordnete Flügelradanordnung (30), die so konfiguriert ist, dass sie von der Antriebswelle (20) in Drehung versetzt wird; wobei
eine Bodenfläche der Flügelradanordnung (30) gegenüber einer Endfläche des Gehäuses (10) angeordnet ist; und entweder die Bodenfläche der Flügelradanordnung (30) oder die Endfläche des Gehäuses (10) mit einem ringförmigen Vorsprung (11) versehen ist, die andere der Bodenfläche der Flügelradanordnung (30) oder der Endfläche des Gehäuses (10) eine ringförmige Nut (31) definiert, die zu dem ringförmigen Vorsprung (11) passt, und zwischen einer Außenwand des ringförmigen Vorsprungs (11) und einer Innenwand der ringförmigen Nut (31) ein eingriffssicherer Zwischenraum (102) definiert ist;
wobei die Flügelradanordnung (30) einen ersten Strömungskanal (301) definiert, der erste Strömungskanal (301) sich durch die Bodenfläche der Flügelradanordnung (30) und eine Seitenfläche der Flügelradanordnung (30) erstreckt, und der erste Strömungskanal (301) mit dem Hohlraum (101) in Verbindung steht.

2. Aufschlussvorrichtung nach Anspruch 1, wobei eine Abmessung des Zwischenraums zwischen der Außenwand des ringförmigen Vorsprungs (11) und der Innenwand der ringförmigen Nut (31) in einem Bereich von 0,05 mm-0,5 mm liegt.

3. Aufschlussvorrichtung nach Anspruch 1, wobei ein Querschnitt des ringförmigen Vorsprungs (11) rechteckig, dreieckig, halbkreisförmig, trapezförmig oder unregelmäßig ist, und ein Querschnitt der ringförmigen Nut (31) rechteckig, dreieckig, halbkreisförmig, trapezförmig oder unregelmäßig ist.

4. Aufschlussvorrichtung nach Anspruch 1, wobei der ringförmige Vorsprung (11) als eine Vielzahl von ringförmigen Vorsprüngen ausgeführt ist, die Ringnut (31) als eine Vielzahl von Ringnuten (31) gebildet ist, die Vielzahl der ringförmigen Vorsprünge koaxial und beabstandet zueinander angeordnet sind, und die Vielzahl der ringförmigen Nuten (31) mit der Vielzahl der ringförmigen Vorsprünge (11) übereinstimmen und koaxial und voneinander beabstandet sind.

5. Aufschlussvorrichtung nach Anspruch 4, wobei die Querschnitte der Vielzahl der ringförmigen Vorsprünge (11) die Form eines Rechtecks, eines Dreiecks, eines Halbkreises, eines Trapezes oder einer unregelmäßigen Form oder einer Kombination davon haben, und die Querschnitte der Vielzahl der ringförmigen Nuten (31) die Form eines Rechtecks, eines Dreiecks, eines Halbkreises, eines Trapezes oder einer unregelmäßigen Form oder einer Kombination davon haben.

6. Aufschlussvorrichtung nach Anspruch 4, wobei in einer Richtung von der Antriebswelle (20) zu einer Seitenwand des Gehäuses (10) die Radien der Vielzahl von ringförmigen Vorsprüngen (11) sukzessive zunehmen, die Höhen der Vielzahl von ringförmigen Vorsprüngen (11) sukzessive abnehmen und die Tiefen der Vielzahl der ringförmigen Nuten (31) entsprechend sukzessive abnehmen.

7. Aufschlussvorrichtung nach Anspruch 4, wobei in einer Richtung von der Antriebswelle (20) zu einer Seitenwand des Gehäuses (10) die Radien der Vielzahl von ringförmigen Vorsprüngen (11) sukzessive zunehmen, die Höhen der Vielzahl von ringförmigen Vorsprüngen (11) sukzessive zunehmen und die Tiefen der Vielzahl von ringförmigen Nuten (31) entsprechend sukzessive zunehmen.

8. Aufschlussvorrichtung nach Anspruch 1, wobei die Flügelradanordnung (30) ein Mischflügelrad (32) umfasst, wobei entweder eine Bodenfläche des Mischflügelrades (32) oder die Endfläche des Gehäuses (10) mit dem ringförmigen Vorsprung (11) versehen ist, und die andere der Bodenfläche des Mischflügelrades (32) oder der Endfläche des Gehäuses (10) die Ringnut (31) definiert, die zu dem ringförmigen Vorsprung (11) passt.

9. Aufschlussvorrichtung nach Anspruch 8, wobei das Gehäuse (10) mit einer Stützplatte (12) versehen ist, eine der Bodenfläche des Mischflügelrades (32) oder eine obere Fläche der Stützplatte (12) mit dem ringförmigen Vorsprung (11) versehen ist, und die andere der Bodenfläche des Mischflügelrades (32) oder der oberen Fläche der Stützplatte (12) die ringförmige Nut (31) definiert, die zu dem ringförmigen Vorsprung (11) passt.

10. Aufschlussvorrichtung nach Anspruch 1, wobei die Flügelradanordnung (30) ein Mischflügelrad (32) und ein Führungsflügelrad (33) umfasst, wobei das Führungsflügelrad (33) unterhalb des Mischflügelrades (32) angeordnet ist; entweder eine Bodenfläche des Führungsflügelrades (33) oder die Endfläche des Gehäuses (10) den ringförmigen Vorsprung (11) definiert, und die andere der Bodenfläche des Führungsflügelrades (33) oder der Endfläche des Gehäuses (10) die Ringnut (31) definiert, die zu dem ringförmigen Vorsprung (11) passt.

11. Aufschlussvorrichtung nach Anspruch 10, wobei das Gehäuse (10) mit einer Stützplatte (12) versehen ist, eine der Bodenfläche des Führungsflügelrades (33) oder eine obere Fläche der Stützplatte (12) mit dem ringförmigen Vorsprung (11) versehen ist, und die andere der Bodenfläche des Führungsflügelrades (33) oder der oberen Fläche der Stützplatte (12) die ringförmige Nut (31) definiert, die zu dem ringförmigen Vorsprung (11) passt.

12. Aufschlussvorrichtung nach Anspruch 10, wobei das Führungsflügelrad (33) einen Führungsströmungskanal (331) um eine zentrale Achse des Führungsflügelrades (33) definiert, und eine Führungsschaufel (332) in dem Führungsströmungskanal (331) angeordnet ist.

13. Aufschlussvorrichtung nach Anspruch 1, wobei das Gehäuse (10) mit einer Stützplatte (12) versehen ist, eine der Bodenfläche der Flügelradanordnung (30) oder eine obere Fläche der Stützplatte (12) mit dem ringförmigen Vorsprung (11) versehen ist, und die andere der Bodenfläche der Flügelradanordnung (30) oder der oberen Fläche der Stützplatte (12) die ringförmige Nut (31) definiert, die zu dem ringförmigen Vorsprung (11) passt.

14. Aufschlussvorrichtung nach Anspruch 1, wobei der erste Strömungskanal (301) eine Öffnung (3011) an der Bodenfläche der Flügelradanordnung (30) aufweist und ein Abstand zwischen der Öffnung (3011) und der Antriebswelle (20) kleiner ist als ein Radius des ringförmigen Vorsprungs (11) .

## Revendications

1. Dispositif de réduction en pâte, comprenant :
un boîtier (10) définissant une cavité (101) ;
un arbre de transmission (20) ;
un ensemble d'hélice (30), disposé dans la cavité (101), configuré pour être entraîné à tourner par l'arbre d'entraînement (20) ; dans lequel
une surface inférieure de l'ensemble d'hélice (30) est disposée face à une surface d'extrémité du boîtier (10) ; et l'une de la surface inférieure de l'ensemble d'hélice (30) ou de la surface d'extrémité du boîtier (10) est dotée d'une protubérance annulaire (11), l'autre de la surface inférieure de l'ensemble d'hélice (30) ou de la surface d'extrémité du boîtier (10) définit une rainure annulaire (31) correspondant à la protubérance annulaire (11), et un jeu à l'épreuve des interférences (102) est défini entre une paroi extérieure de la protubérance annulaire (11) et une paroi intérieure de la rainure annulaire (31) ;
dans lequel l'ensemble d'hélice (30) définit un premier canal d'écoulement (301), le premier canal d'écoulement (301) s'étend à travers la surface inférieure de l'ensemble d'hélice (30) et une surface latérale de l'ensemble d'hélice (30), et le premier canal d'écoulement (301) communique avec la cavité (101).

2. Dispositif de réduction en pâte selon la revendication 1, dans lequel une dimension du jeu entre la paroi extérieure de la protubérance annulaire (11) et la paroi intérieure de la rainure annulaire (31) est comprise dans une plage de 0,05 mm à 0,5 mm.

3. Dispositif de réduction en pâte selon la revendication 1, dans lequel une coupe transversale de la protubérance annulaire (11) est rectangulaire, triangulaire, semi-circulaire, trapézoïdale ou irrégulière, et une coupe transversale de la rainure annulaire (31) est rectangulaire, triangulaire, semi-circulaire, trapézoïdale ou irrégulière.

4. Dispositif de réduction en pâte selon la revendication 1, dans lequel la protubérance annulaire (11) est implémentée sous forme de pluralité de protubérances annulaires, la rainure annulaire (31) est implémentée sous forme de pluralité de rainures annulaires (31), les protubérances de la pluralité de protubérances annulaires sont coaxiales et espacées les unes des autres, et les rainures de la pluralité de rainures annulaires (31) correspondent à la pluralité de protubérances annulaires (11) et sont coaxiales et espacées les unes des autres.

5. Dispositif de réduction en pâte selon la revendication 4, dans lequel des coupes transversales de la pluralité de protubérances annulaires (11) sont dans n'importe forme rectangulaire, triangulaire, semi-circulaire, trapézoïdale ou irrégulière ou combinaison de ces formes, et les coupes transversales de la pluralité de rainures annulaires (31) sont dans n'importe forme rectangulaire, triangulaire, semi-circulaire, trapézoïdale ou irrégulière ou combinaison de ces formes.

6. Dispositif de réduction en pâte selon la revendication 4, dans lequel dans une direction allant de l'arbre de transmission (20) jusqu'à une paroi latérale du boîtier (10), les rayons de la pluralité de protubérances annulaires (11) augmentent successivement, les hauteurs de la pluralité de protubérances annulaires (11) diminuent successivement, et les profondeurs de la pluralité de rainures annulaires (31) diminuent successivement de manière correspondante.

7. Dispositif de réduction en pâte selon la revendication 4, dans lequel dans une direction allant de l'arbre d'entraînement (20) jusqu'à une paroi latérale du boîtier (10), les rayons de la pluralité de protubérances annulaires (11) augmentent successivement, les hauteurs de la pluralité de protubérances annulaires (11) augmentent successivement, et les profondeurs de la pluralité de rainures annulaires (31) augmentent successivement de manière correspondante.

8. Dispositif de réduction en pâte selon la revendication 1, dans lequel l'ensemble d'hélice (30) comprend une hélice de mixage (32), l'une d'une surface inférieure de l'hélice de mixage (32) ou de la surface d'extrémité du boîtier (10) est dotée de la protubérance annulaire (11), et l'autre de la surface inférieure de l'hélice de mixage (32) ou de la surface d'extrémité du boîtier (10) définit la rainure annulaire (31) correspondant à la protubérance annulaire (11).

9. Dispositif de réduction en pâte selon la revendication 8, dans lequel le boîtier (10) est doté d'une plaque de support (12), l'une de la surface inférieure de l'hélice de mixage (32) ou d'une surface supérieure de la plaque de support (12) est dotée de la protubérance annulaire (11), et l'autre de la surface inférieure de l'hélice de mixage (32) ou de la surface supérieure de la plaque de support (12) définit la rainure annulaire (31) correspondant à la protubérance annulaire (11).

10. Dispositif de réduction en pâte selon la revendication 1, dans lequel l'ensemble d'hélice (30) comprend une hélice de mixage (32) et une hélice de guidage (33), l'hélice de guidage (33) est disposée sous l'hélice de mixage (32) ; l'une de la surface inférieure de l'hélice de guidage (33) ou de la surface d'extrémité du boîtier (10) définit la protubérance annulaire (11), et l'autre de la surface inférieure de l'hélice de guidage (33) ou de la surface d'extrémité du boîtier (10) définit la rainure annulaire (31) correspondant à la protubérance annulaire (11).

11. Dispositif de réduction en pâte selon la revendication 10, dans lequel le boîtier (10) est doté d'une plaque de support (12), l'une de la surface inférieure de l'hélice de guidage (33) ou d'une surface supérieure de la plaque de support (12) est dotée de la protubérance annulaire (11), et l'autre de la surface inférieure de l'hélice de guidage (33) ou de la surface supérieure de la plaque de support (12) définit la rainure annulaire (31) correspondant à la protubérance annulaire (11).

12. Dispositif de réduction en pâte selon la revendication 10, dans lequel l'hélice de guidage (33) définit un canal d'écoulement de guidage (331) autour d'un axe central de l'hélice de guidage (33), et une aube de guidage (332) est disposée dans le canal d'écoulement de guidage (331).

13. Dispositif de réduction en pâte selon la revendication 1, dans lequel le boîtier (10) est équipé d'une plaque de support (12), l'une de la surface inférieure de l'ensemble d'hélice (30) ou d'une surface supérieure de la plaque de support (12) est dotée de la protubérance annulaire (11), et l'autre de la surface inférieure de l'ensemble d'hélice (30) ou de la surface supérieure de la plaque de support (12) définit la rainure annulaire (31) correspondant à la protubérance annulaire (11).

14. Dispositif de réduction en pâte selon la revendication 1, dans lequel le premier canal d'écoulement (301) présente une ouverture (3011) sur la surface inférieure de l'ensemble d'hélice (30), et une distance entre l'ouverture (3011) et l'arbre de transmission (20) est inférieure à un rayon de la protubérance annulaire (11) .
